# EUROPÄISCHE PATENTANMELDUNG

(11) **EP 1 101 909 A2**
(43) Veröffentlichungstag der Anmeldung: **23.05.2001**
(21) Anmeldenummer: 00124264.3
(22) Anmeldetag: 13.11.2000
(51) Int. Cl.: F01N 3/20

(54) **Photokatalytische Abgasreinigungsanlage**

(30) Priorität: 17.11.1999 DE 19955325
(71) Anmelder: Volkswagen Aktiengesellschaft, 38436 Wolfsburg (DE)
(72) Erfinder: Bechmann, Olaf, 30167 Hannover (DE); Engeler, Werner, 38527 Meine (DE)

(57) **Zusammenfassung**

Die Erfindung betrifft eine photokatalytische Abgasreinigungsanlage, insbesondere für Verbrennungskraftmaschinen, mit einem Photokatalysator, der eine auf einer Trägerfolie fixierte, katalytisch wirksame Substanz umfaßt, wobei die Trägerfolie zur Ausbildung von vom Abgas durchströmbaren Kanälen mäanderförmig zwischen zwei im wesentlichen parallel zueinander angeordneten Stützfolien angeordnet ist, und mit einer Strahlungsquelle zum Beaufschlagen der katalytisch wirksamen Substanz mit einer elektromagnetischen Strahlung.

Es ist vorgesehen, daß die Strömungskanäle (24) in Längserstreckung des Photokatalysators (12) einen sich verändernden Querschnitt aufweisen.

## Beschreibung

Die Erfindung betrifft eine photokatalytische Abgasreinigungsanlage, insbesondere für Verbrennungskraftmaschinen, mit den im Oberbegriff des Anspruchs 1 genannten Merkmalen.

Photokatalytische Abgasreinigungsanlagen der gattungsgemäßen Art sind bekannt. Zur Minderung von Schadstoffemissionen wird das Abgas einer Verbrennungskraftmaschine, insbesondere an Kraftfahrzeugen, durch eine Abgasreinigungsanlage geführt. Die während des Verbrennungsvorgangs eines Luft-Kraftstoff-Gemisches gebildeten Schadstoffe, wie Stickoxide (NOₓ), unvollständig verbrannte Kohlenwasserstoffe (HC) oder Kohlenmonoxid (CO), werden hierbei an Katalysatoren zu weniger umweltrelevanten Produkten umgesetzt. Eine hierfür benötigte Aktivierungsenergie wird bei photokatalytischen Abgasreinigungsanlagen durch elektromagnetische Strahlung (Licht) bereitgestellt. Hierdurch wird es prinzipiell möglich, eine Behandlung des Abgases bei, beispielsweise gegenüber der Bereitstellung einer thermischen Aktivierungsenergie, relativ niedrigeren Temperaturen zu ermöglichen. Ferner kann insbesondere durch eine Wahl einer Wellenlänge der elektromagnetischen Strahlung eine Selektivität der zu behandelnden Schadstoffe erzielt werden.

Bekannte photokatalytische Abgasreinigungsanlagen umfassen einen Photokatalysator, der von dem Abgas durchströmbare Kanäle ausbildet. Zur Ausbildung dieser Kanäle ist vorgesehen, eine katalytisch wirksame Substanz auf eine Trägerfolie zu fixieren, wobei die Trägerfolie zur Ausbildung der vom Abgas durchströmbaren Kanäle mäanderförmig zwischen wenigstens zwei, im wesentlichen parallel zueinander angeordneten Stützelementen angeordnet ist. Diese Stützelemente sind vorzugsweise auf Zylinderkreisflächen angeordnet, so daß durch die mäanderförmig angeordnete Trägerfolie auf einer Kreisfläche eine Vielzahl, im wesentlichen parallel verlaufender Strömungskanäle entstehen. Dem Photokatalysator ist eine Strahlungsquelle zugeordnet, mittels der die katalytisch wirksame Substanz mit der elektromagnetischen Strahlung beaufschlagbar ist. Bei den bekannten Photokatalysatoren ist nachteilig, daß eine Ausleuchtung der katalytisch wirksamen Substanz über die Längserstreckung des Photokatalysators nur eingeschränkt möglich ist. Hierdurch ist die Wirksamkeit des Photokatalysators beeinträchtigt.

Der Erfindung liegt daher die Aufgabe zugrunde, eine photokatalytische Abgasreinigungsanlage der gattungsgemäßen Art zu schaffen, die einfach aufgebaut ist und die eine verbesserte Beaufschlagung der katalytisch wirksamen Substanz mit einer elektromagnetischen Strahlung ermöglicht.

Erfindungsgemäß wird diese Aufgabe durch eine photokatalytische Abgasreinigungsanlage mit den im Anspruch 1 genannten Merkmalen gelöst. Dadurch, daß die Strömungskanäle in Längsrichtung des Photokatalysators einen sich verändernden Querschnitt aufweisen, wird vorteilhaft erreicht, daß bei im wesentlichen in Längsrichtung des Photokatalysators einfallender elektromagnetischer Strahlung diese auf eine größere Oberfläche der Strömungskanäle trifft. Insbesondere, wenn die Strömungskanäle sich aus Richtung der Strahlungsquelle verjüngen, wird eine in etwa trichterförmige Ausbildung der Strömungskanäle erreicht, wobei die Mantelfläche der Strömungskanäle eine vergrößerte Ausleuchtfläche für die Strahlungsquelle bildet. Insgesamt wird hierdurch möglich, auch in zu der Strahlungsquelle entfernter angeordneten Bereichen der Strömungskanäle mit der katalytisch wirksamen Substanz die Intensität der Bestrahlung zu erhöhen. Hierdurch wird insgesamt der Wirkungsgrad der photokatalytischen Abgasreinigungsanlage erhöht.

In bevorzugter Ausgestaltung der Erfindung ist vorgesehen, daß zu der mäanderförmigen Anordnung der Trägerfolie führende Falzkanten nicht parallel zu den Stützelementen verlaufen. Diese Falzkanten verlaufen somit unter einem Winkel konisch zu den Stützelementen, so daß in einfacher Weise die bewährte mäanderförmige Anordnung der Trägerfolie beibehalten werden kann, während gleichzeitig eine Ausbildung der Strömungskanäle mit sich veränderndem Querschnitt, insbesondere sich von der Strahlungsquelle weg verjüngendem Querschnitt, möglich ist. Gleichzeitig lassen sich so auf relativ kleiner Gesamtfläche eine Vielzahl von Strömungskanälen integrieren, so daß die insgesamt anströmbare und durch die erfindungsgemäße Ausgestaltung ausleuchtbare Fläche der katalytisch wirksamen Substanz maximierbar ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Prinzipdarstellung einer photokatalytischen Abgasreinigungsanlage;
- Figur 2: schematisch einen Querschnitt durch einen Photokatalysator;
- Figuren 3a bis 3c: die Ausbildung von Strömungskanälen des Photokatalysators nach einem zweiten Aus-führungsbeispiel und
- Figuren 4a bis 4c: die Ausbildung von Strömungskanälen des Photokatalysators nach einem zweiten Aus-führungsbeispiel.

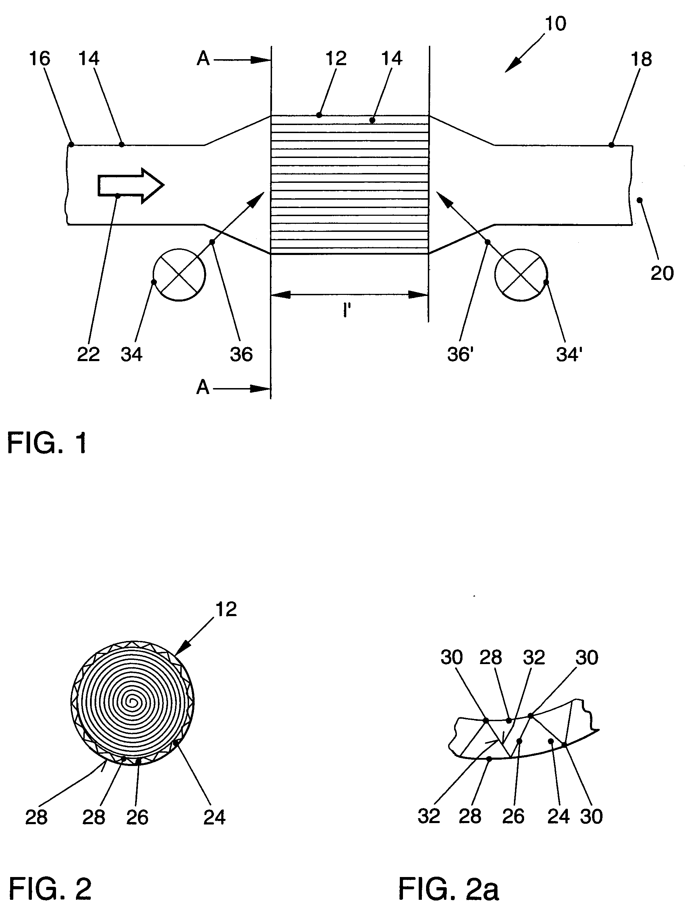

Figur 1 zeigt schematisch eine insgesamt mit 10 bezeichnete photokatalytische Abgasreinigungsanlage. Die photokatalytische Abgasreinigungsanlage 10 umfaßt einen Photokatalysator 12, der in einen Abgaskanal 14 einer Verbrennungskraftmaschine integriert ist. Der Abgaskanal 14 ist mit seinem einen Ende 16 mit einer nicht dargestellten Verbrennungskraftmaschine und mit seinem anderen Ende 18 mit einem ins Freie mündenden Auslaß 20 verbunden. Der Photokatalysator 12 wird von einem hier schematisch angedeuteten Abgas 22 durchströmt. Der Photokatalysator 12 besitzt eine Vielzahl von Strömungskanälen 24.

Anhand der schematischen Schnittdarstellung entlang der Linie A-A, die in Figur 2 gezeigt ist, wird deutlich, daß die Strömungskanäle dadurch gebildet sind, daß eine Trägerfolie 26 mäanderförmig gefaltet ist und zwischen zwei im wesentlichen parallel zueinander angeordneten Stützfolien 28 angeordnet ist. Figur 2a zeigt hierzu eine schematische Ausschnittsvergrößerung. Die Trägerfolie 26 ist entlang von Falzkanten 30 aus einem ebenen, flächenhaften Gebilde zu der Mäanderform gefaltet. Die Falzkanten 30 bilden gleichzeitig Befestigungspunkte (Befestigungslinien) mit den Trägerfolien 28. Durch Aufwickeln einer derartigen Anordnung aus den im wesentlichen parallel verlaufenden Stützfolien 28 und der dazwischen angeordneten mäanderförmig gefalteten Trägerfolie 26 kann - wie Figur 2 zeigt - auf einem gesamten Querschnitt des Photokatalysators 12 eine Vielzahl einzelner Strömungskanäle 24 gebildet sein. Die Trägerfolie 26 ist beidseitig mit einer katalytisch wirksamen Substanz 32 versehen.

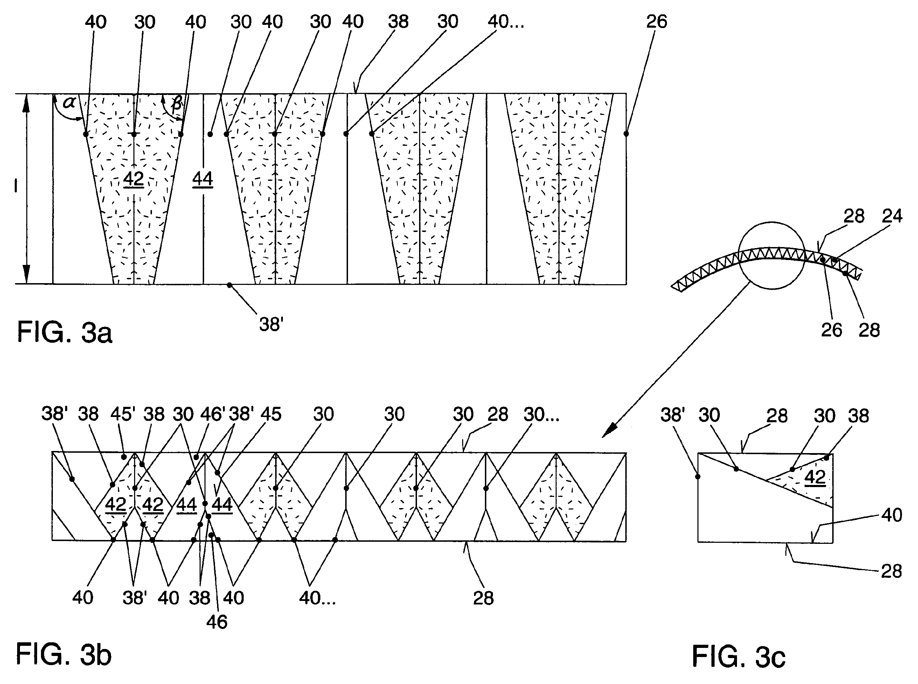

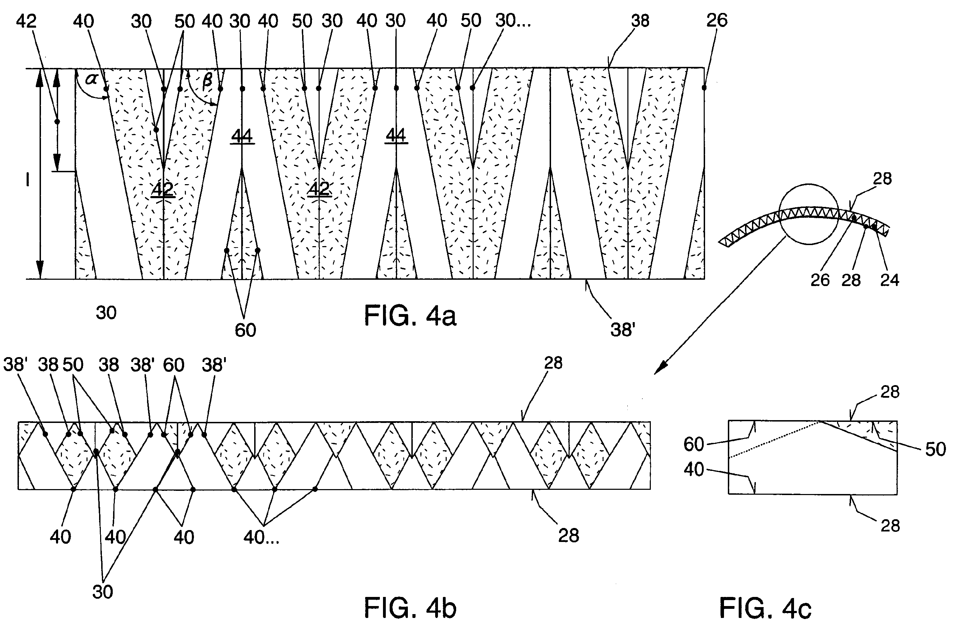

Zur Aktivierung der katalytisch wirksamen Substanz 32 ist dem Photokatalysator 12 eine Strahlungsquelle 34 (Figur 1) für elektromagnetische Wellen 36 (Licht) zugeordnet. Über die Strahlungsquelle 34 werden die elektromagnetischen Wellen 34, beispielsweise über nicht dargestellte Linsen, Umlenkspiegel, Filter oder dergleichen, in die Strömungskanäle 24 geleitet. Durch die elektromagnetischen Wellen 36 erfolgt ein Beleuchten und somit Aktivieren der katalytisch wirksamen Substanz 32 auf der Trägerfolie 26. Um über die in Strömungsrichtung des Abgases 22 gegebene Länge der Strömungskanäle 24 eine möglichst große aktivierbare (beleuchtbare) Fläche der katalytisch wirksamen Substanz 32 zu erzielen, ist gemäß den in den Figuren 3 und 4 gezeigten Ausführungsbeispielen die Anordnung der Trägerfolie 26 wie folgt vorgesehen:

In Figur 3a ist in Draufsicht eine Trägerfolie 26 in nicht gefaltetem Zustand, das heißt als im wesentlichen ebenes flächenhaftes Gebilde, dargestellt. Die Darstellung in den Figuren erfolgt nicht maßstäblich, sondern dient nur lediglich der Erläuterung des erfinderischen Grundgedankens. Die Trägerfolie 26 besitzt eine Breite |, die der Länge |' (Figur 1) des Photokatalysators 12 entspricht. Die Trägerfolie 26 ist beidseitig mit der katalytisch wirksamen Substanz ausgestattet, beispielsweise beschichtet. In Figur 3a sind erste Falzlinien 30 dargestellt, die in einem rechten Winkel zu den Längskanten 38 und 38' der Trägerfolie 26 verlaufen. Zwischen jeweils zwei ersten Falzlinien 30 ist eine zweite Falzlinie 40 vorgesehen, die zu einem von 90° abweichenden Winkel zu der Längskante 38 verlaufen. Hierbei sind die Falzlinien 40 alternierend unter komplementären Winkeln angeordnet, das heißt, die Summe eines Winkels a und eines Winkels β zwischen zwei aufeinanderfolgenden zweiten Falzlinien 40 und der Längskante 38 ergibt 180°. Die Größe der Winkel a und somit β sind so gewählt, daß die Falzlinien 40 über die Länge l der Trägerfolie 26 die Falzlinien 30 nicht schneiden. Hierdurch kommt es durch die in der Draufsicht in Figur 3a schematisch angedeuteten Bereiche 42 beziehungsweise 44 zwischen zwei aufeinanderfolgenden Falzlinien 40. Die Bereiche 42 beziehungsweise 44 bilden - in der noch nicht gefalteten Darstellung in Figur 3a - Trapeze, deren Basis jeweils an den gegenüberliegenden Längskanten 38 beziehungsweise 38' der Trägerfolie 26 liegen.

Wird die Trägerfolie 26 anschließend entlang der Falzlinien 30 beziehungsweise 40 mäanderförmig gefaltet, das heißt, an jeder Falzlinie 40, 30, 40 usw. erfolgt eine Richtungsumkehr der Trägerfolie 26, kommt es zur Ausbildung von Strömungskanälen 24 mit sich über die Länge länderndem Querschnitt.

Durch das mäanderförmige Falten der Trägerfolie 26 entlang der Falzlinien 40 beziehungsweise 30 - die Falzlinien 30 und 40 sind jetzt Falzkanten 30 und 40 - ergibt sich, daß die Falzkanten 40 jeweils parallel zu der unteren Stützfolie 28 verlaufen. Die Falzkanten 30 sind, in Strömungsrichtung des Abgases 22 betrachtet, über die Länge l des Photokatalysators 12 ansteigend beziehungsweise abfallend. Gemäß der Darstellung in Figur 3b fällt die Papierebene mit der Längskante 38' der Trägerfolie 26 zusammen, so daß die Bereiche 44 jeweils sich trichterförmig verjüngende Strömungskanäle 24 ergeben, die von der unteren Stützfolie 28 und dem entlang der Falzkante 30 gefalteten Bereich 44 begrenzt sind. Eine Eintrittsfläche 45 dieses Strömungskanals 24 ist somit deutlich größer als eine Austrittsfläche 46 dieses Strömungskanals 24. Die Austrittsfläche 46 wird von der gefalteten Längskante 38 und der unteren Stützfolie 28 begrenzt. Die Eintrittsfläche 45 wird von der unteren Stützfolie 28 und der Längskante 38' begrenzt. Das Verhältnis von Eintrittsfläche 45 zur Austrittsfläche 46 bestimmt sich über die Wahl der Winkel a beziehungsweise β. Durch die über die Länge l abfallende Falzkante 30 stehen die Teilflächen des Abschnittes 44 nicht senkrecht zu den Trägerfolien 28, sondern sind - in die Ebene projiziert - wie Figur 3b verdeutlicht sichtbar. Hierdurch ergibt sich eine vergrößerte, beleuchtete Fläche für die im wesentlichen senkrecht in die Strömungskanäle 24 einfallende elektromagnetische Strahlung 36.

Auch im Bereich der Abschnitte 42 der ungefalzten Trägerfolie 26 kommt es zur Ausbildung von Strömungskanälen 24 mit sich veränderndem Querschnitt. Dort wird eine Eintrittsöffnung 45' des Strömungskanals 24 begrenzt von der oberen Stützfolie 28, der Längskante 38' eines Abschnitts 44 von einer Falzkante 30 bis zur nächstfolgenden Falzkante 40, der Längskante 38' eines Abschnitts 42 und der Längskante 38' des nachfolgenden Abschnitts 44 von der Falzkante 40 bis zur nächsten Falzkante 30. Die Austrittsöffnungen 46' dieser Strömungskanäle 24 werden begrenzt von der unteren Stützfolie 28 und der Längskante 38 der Trägerfolie 26. So kommt es auch hier - in die Ebene projiziert- zur Ausbildung von Teilflächen 42, die mit der im wesentlichen senkrecht einfallenden elektromagnetischen Strahlung 36 ausleuchtbar sind.

Anhand der Erläuterungen wird deutlich, daß somit insgesamt eine vergrößerte ausleuchtbare Fläche von der Trägerfolie 26 und somit der katalytisch wirksamen Substanz erzielt ist. Insbesondere ist eine Intensität der Beleuchtung auch an in Strömungsrichtung stromab der Strahlungsquelle 34 liegende Bereiche erhöht.

Da die Summe der Fläche der Trägerfolie 26 unabhängig von ihrer Falzart gleich bleibt, entstehen mit in Strömungsrichtung des Abgases 22 geneigt angeordnete Flächen an den entsprechenden Rückseiten der Trägerfolie 26 entgegengesetzt geneigte Flächen, so daß einem sich trichterförmig verjüngenden Strömungskanal 24 immer ein sich trichterförmig erweiternder Strömungskanal 24 zugeordnet ist. Durch Anordnung einer weiteren Strahlungsquelle 36' stromab des Photokatalysators 12 (Figur 1) kann eine elektromagnetische Strahlung 36' entgegen der Strömungsrichtung des Abgases 22 in den Photokatalysator 12 eingebracht werden, so daß sich für die elektromagnetische Strahlung 36 beziehungsweise 36' insgesamt nur in die Ebene projizierte, unmittelbar beleuchtbare Teilflächen ergeben. Insgesamt wird hiermit die Effizienz des Photokatalysators 12 wesentlich verbessert.

Wie Figur 3c zeigt, stützt sich die gefaltete Trägerfolie 26 einerseits über die Falzkanten 40 an der unteren Trägerfolie 28 ab. An der oberen Trägerfolie 28 stützt sich die Trägerfolie 26 nur unmittelbar an den Längskanten 38 beziehungsweise 38' im Bereich der Falzkanten 30 ab.

Anhand der Figuren 4a, 4b und 4c wird eine abgewandelte Ausführungsform dargestellt, wobei gleiche Teile wie in den vorhergehenden Figuren mit gleichen Bezugszeichen versehen und nicht nochmals erläutert sind.

Die Trägerfolie 26 besitzt zusätzlich zu den Falzlinien 30 und 40 Falzlinien 50 und 60. Die Falzlinien 50 verlaufen hierbei parallel zu den Falzlinien 40 im Bereich der Abschnitte 42, während die Falzlinien 60 parallel zu den Falzlinien 40 im Bereich der Abschnitte 44 verlaufen. Die Falzlinien 50 beziehungsweise 60 schneiden die Falzlinien 30 bei 1/₂.

Hierdurch ergibt sich, daß bei mäanderförmigem Falten der Trägerfolie 26 die Steigung der Falzkante 30 über die Länge l unterbrochen wird, so daß die Trägerfolie 26 entlang ihrer zusätzlichen Falzkanten 50 beziehungsweise 60 an der oberen Stützfolie 28 anliegt. Hierdurch erhält der Schichtverbund aus den Stützfolien 28 und der dazwischen angeordneten gefalteten Trägerfolie 26 eine höhere Stabilität.

## Patentansprüche

1. Photokatalytische Abgasreinigungsanlage, insbesondere für Verbrennungskraftmaschinen, mit einem Photokatalysator, der eine auf einer Trägerfolie fixierte, katalytisch wirksame Substanz umfaßt, wobei die Trägerfolie zur Ausbildung von vom Abgas durchströmbaren Kanälen mäanderförmig zwischen zwei im wesentlichen parallel zueinander angeordneten Stützfolien angeordnet ist, und mit einer Strahlungsquelle zum Beaufschlagen der katalytisch wirksamen Substanz mit einer elektromagnetischen Strahlung, **dadurch gekennzeichnet**, daß die Strömungskanäle (24) in Längserstreckung des Photokatalysators (12) einen sich verändernden Querschnitt aufweisen.

2. Photokatalytische Abgasreinigungsanlage nach Anspruch 1, **dadurch gekennzeichnet**, daß sich der Querschnitt der Strömungskanäle (24) über die Länge (l) des Photokatalysators (12) kontinuierlich verändert.

3. Photokatalytische Abgasreinigungsanlage nach einem der vorhergehenden Ansprüche, **dadurch gekennzeichnet**, daß die Trägerfolie (26) aus einem ebenen flächenhaften Gebilde entlang von vorgebbaren Falzkanten (30, 40) gefaltet ist, wobei erste Falzkanten (30) rechtwinklig zu Längskanten (38, 38') der Trägerfolie (26) verlaufen und zwischen jeweils zwei ersten Falzkanten (30) jeweils eine zweite Falzkante (40) angeordnet ist, die einen von 90° abweichenden Winkel zur Längskante (38) aufweist.

4. Photokatalytische Abgasreinigungsanlage nach einem der vorhergehenden Ansprüche, **dadurch gekennzeichnet**, daß zwei aufeinanderfolgende zweite Falzkanten (40) unter komplementären Winkeln (a, β) zur Längskante (38) angeordnet sind.

5. Photokatalytische Abgasreinigungsanlage nach einem der vorhergehenden Ansprüche, **dadurch gekennzeichnet**, daß die Falzkanten (40) die Falzkanten (30) nicht schneiden.

6. Photokatalytische Abgasreinigungsanlage nach einem der vorhergehenden Ansprüche, **dadurch gekennzeichnet**, daß stromaufwärts und stromabwärts des Photokatalysators (12) jeweils eine Strahlungsquelle (34, 34') angeordnet ist, deren elektromagnetische Strahlung (36, 36') jeweils im wesentlichen senkrecht in die Strömungskanäle (24) einfällt.

7. Photokatalytische Abgasreinigungsanlage nach einem der vorhergehenden Ansprüche, **dadurch gekennzeichnet**, daß den Falzkanten (40) parallel verlaufende Falzkanten (50) und (60) zugeordnet sind, die jeweils die Falzkanten (30) schneiden.

8. Photokatalytische Abgasreinigungsanlage nach Anspruch 7, **dadurch gekennzeichnet**, daß die Falzkanten (50, 60) die Falzkanten (30) bei l/₂ schneiden.
